# EUROPÄISCHE PATENTSCHRIFT

(11) **EP 0 919 579 B1**
(45) Veröffentlichungstag und Bekanntmachung des Hinweises auf die Patenterteilung: **04.09.2002**
(21) Anmeldenummer: 98121884.5
(22) Anmeldetag: 18.11.1998
(51) Int. Cl.: C08F 283/00, C08L 75/04, C08L 33/14, C09D 175/04

(54) **Lagerstabile, selbstvernetzende Hybriddispersionen**
Storage-stable self-crosslinking hybrid dispersions
Dispersions hybrides autoréticulants stables au stockage

(30) Priorität: 01.12.1997 DE 19753222
(43) Veröffentlichungstag der Anmeldung: 02.06.1999
(73) Patentinhaber: BAYER AG, 51368 Leverkusen (DE)
(72) Erfinder: Irle, Christoph, Dr., 47800 Krefeld (DE); Blum, Harald, Dr., 51375 Leverkusen (DE); Kremer, Wolfgang, 47647 Kerken (DE); Roschu, Rolf, 47877 Willich (DE)

(56) Entgegenhaltungen:
- EP-A- 0 308 115
- EP-A- 0 669 356
- EP-A- 0 705 855
- US-A- 5 371 133

## Beschreibung

Die Erfindung betrifft bei Raumtemperatur selbstvernetzende, wässrige Hybriddispersionen, ein Verfahren zur Herstellung derartiger wässriger Polymerdispersionen und ihre Verwendung fiir lagerstabile Einkomponentenlacke.

Es ist bekannt, dass wässrige Polyurethan-Dispersionen für die Herstellung von Klebstoffen und Beschichtungen geeignet sind. Neben einer guten Chemikalienbeständigkeit zeichnen sich Filme aus Polyurethan-Dispersionen vor allem durch Abriebfestigkeit, Zähigkeit und gute Haftung auf vielen Untergründen - z.B. Holz, Metall, Kunststoffe - aus.

Polyurethane werden üblicherweise nach dem Isocyanat-Polyadditionsprozeß hergestellt. Die verschiedenen Möglichkeiten zur Herstellung dieser Bindemittel wurden z.B. von D. Dieterich in einem Übersichtsartikel zusammengefaßt [Prog. Org. Coatings **9**, 281 (1981)].

Es ist ferner bekannt, in Gegenwart wässriger Polyurethan-Dispersionen eine radikalische Polymerisation geeigneter Vinylmonomere durchzuführen, um die Eigenschaften der Dispersionen in geeigneter Weise zu modifizieren, z.B. DE-A 1 953 348, EP-A 167 188, 189 945 und 308 115.

Weiterhin ist bekannt, in das zunächst hergestellte Polyurethan terminale oder laterale α, β-olefinisch ungesättigte Doppelbindungen einzubauen (z.B. EP-A 098 752, 522 419, 522 420, 649 865). Diese Polyurethan-Makromonomere sollen den Vorteil einer besseren Anbindung an das im nächsten Schritt (durch radikalische Copolymerisation) hergestellte Polyacrylat bieten. Bereits in der DE-A 1 953 348 wird jedoch beschrieben, dass auch ohne Einbau ungesättigter Gruppen in das Polyurethan bei der radikalischen Polymerisation eine mehr oder weniger stark ausgeprägte Pfropfung eintritt und dass die hohe Vernetzungsdichte, die sich aus der Verwendung ungesättigter Polyurethane ergibt, mitunter von Nachteil sein kann.

Um die Beständigkeitseigenschaften von Polyurethan- oder Polyurethan-Polyacrylat-Hybriddispersionen weiter zu verbessern, wurden bereits verschiedene Möglichkeiten zur chemischen Vernetzung von Filmen aus derartigen Bindemitteln vorgeschlagen. Im Vergleich zu zweikomponentigen Beschichtungen oder Einbrennsystemen bieten wegen der einfachen Anwendung besonders solche Systeme Vorteile, die lagerstabil sind und ohne Zugabe einer Vernetzungskomponente bei Raumtemperatur chemisch vernetzen.

Bekannt ist, Polyurethan-Dispersionen mit oxidativ trocknenden Einheiten zu versehen. Filme aus solchen Dispersionen vernetzen unter dem Einfluß von Luftsauerstoff. ("Advances in Urethane Science and Technology", Bd. 10, S. 121-162 (1987)).

Aus der EP-A 332 326 ist bekannt Carbonylgruppen-haltige Polyurethan-Dispersionen mit Hydrazin-funktionellen Polyacrylat-Dispersionen oder Carbonylgruppen-haltige Polyacrylat-Dispersionen mit Hydrazin-funktionellen Polyurethan-Dispersionen zu mischen. Nach der Verfilmung erfolgt eine Vernetzung durch Reaktion der Carbonylgruppen mit Hydrazingruppen.

Aus der (EP-A 649 865) ist ein Verfahren zur Herstellung von selbstvernetzenden Polyurethan-Polyacrylat-Hybriddispersionen auf Basis von Polyurethan-Makromonomeren, gepfropft mit Carbonylgruppen enthaltenden Acrylat-Monomeren bekannt. Den Dispersionen werden Polyhydrazide als Vernetzer zugegeben.

Selbstvernetzende Dispersionen mit Hydrazingruppen enthaltenden Vernetzern haben jedoch den Nachteil, dass sie geringe Mengen Hydrazin freisetzen können.

Eine weitere vorgeschlagene Möglichkeit ist die Vernetzung von Carbonylgruppen mit Polyaminen unter Bildung von Enamin- oder Azomethin-Strukturen. So wurde beschrieben, dass Carbonyl-funktionelle Polyurethan-Polyacrylat-Hybriddispersionen, welche die Carbonylgruppen im Polyurethanteil enthalten, und polyfunktionelle Amine ein lagerstabiles, selbstvemetzendes 1K-System bilden, dessen Vernetzung durch das Verdunsten des Neutralisationsamins gesteuert wird (R. Tennebroek, J. Geurts, A. Overbeek, A. Hannsen, 4^{th} Nürnberg Congress "Creative Advances in Coatings Technology", Paper 17, (1997).

In der EP-A 0 705 855 werden selbstvernetzende, lagerstabile, wässrige Dispersionen beschrieben. Diese wurden durch Mischen zweier Polymerdispersionen erhalten, wobei die eine Dispersion aktivierte Ketomethylgruppen besitzt und die andere Araldiimin-Gruppen aufweist.

Nach wie vor erreichen solche Systeme nicht das bekannte hohe Niveau der 2K-Polyurethanbeschichtungen. Überraschenderweise wurde nun gefunden, dass selbstvernetzende Polyurethan-Hybriddispersionen ein besonders hohes anwendungstechnisches Niveau erreichen, wenn in den Acrylatteil Acetoacetoxy-Einheiten eingeführt werden.

Gegenstand der vorliegenden Erfindung sind wässrige, selbstvernetzende Bindemittel, aus Polyaminen und Acetoacetoxy-Gruppen Hybriddispersionen.

Solche Dispersionen sind lagerstabil und können bei niedrigen Temperaturen, z. B. bei Raumtemperatur, während und/oder nach der Filmbildung unter Enamin-Bildung reagieren.

Weiterhin betrifft die Erfindung ein Verfahren zur Herstellung von Hybriddispersionen, die Acetoacetoxy-Gruppen ausschließlich im Polyacrylatteil enthalten. Durch dieses Verfahren können Dispersionen mit einem hohen Anteil Acetoacetoxygruppen hergestellt werden.

Die Einführung der funktionellen Gruppen in den Acrylatteil der Hybriddispersionen ermöglicht eine hohe Vernetzungsdichte. Um die hochwertigen Eigenschaften des Polyurethans, die aus dem segmentierten Aufbau dieses Teils resultieren, auch nach der Acrylatpfropfung und der Vernetzungsreaktion beizubehalten, ist es vorteilhaft, den Polyurethanteil nur zu einem geringen Teil chemisch zu vernetzen bzw. zu pfropfen. Dies wird durch die im weiteren näher beschriebenen Hybriddispersionen gelöst.

Die erfindungsgemäßen Hybriddispersionen bestehen aus
A. einer Polyurethandispersion, wobei gilt, dass der Anteil Polyurethan der Hybriddispersion 10 - 95 % , bevorzugt 40 - 90 Gew.-% (bezogen jeweils auf den Gesamt-Festgehalt) beträgt,
B. 90 - 5 Gew.-%, bevorzugt 60 - 10 Gew.-% eines Polymerisats, hergestellt in Gegenwart dieser Polyurethan-Dispersion aus einer Mischung von Vinylmonomeren, enthaltend 0,5 - 20 Gew.-% (bezogen auf den Gesamt-Festgehalt der Dispersion) einer Verbindung, die Acetoacetoxygruppen trägt,
C. einem mindestens difunktionellem primärem oder sekundärem Amin mit einem Molekulargewicht von weniger als 1000 im Equivalentverhältnis, bezogen auf Acetoacetoxygruppen von 0,5:1 bis 1,1:1, bevorzugt 0,5:1 bis 1:1,
wobei gilt, dass sich die Komponenten A und B zu 100 Gew.-% addieren.

Die zur Herstellung der Polyurethan-Polyacrylat-Hybriddispersionen benötigten Polyurethan-Dispersionen sind bekannt. Es handelt sich dabei um Dispersionen, aufgebaut aus
A1. Polyisocyanaten,
A2. polymeren Polyolen mit mittleren Molgewichten von 400 bis 6000,
A3. gegebenenfalls Monoalkoholen,
A4. Polyolen, Aminopolyolen oder Polyaminen mit einem Molgewicht unter 400, wobei wenigstens eines dieser Polyole bzw. Polyamine eine ionische Gruppe enthält oder zur Ausbildung einer ionischen Gruppe befähigt ist. Diese ionische Gruppe kann kationisch oder bevorzugt anionisch sein. Der Einbau von Verbindungen dieser Produktklasse mit z.B. freien Carboxygruppen in das Polyurethan bedeutet, dass diese Gruppierungen durch Neutralisation in ionische Gruppen überführt werden können, d. h. sie sind zur Ausbildung einer ionischen Gruppe befähigt.

Geeignete Polyisocyanate A1 sind Diisocyanate der Formel

R₁(NCO)₂,

wobei
- R₁: einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet.

Beispiele derartiger bevorzugt einzusetzender Diisocyanate sind Tetramethylendiisocyanat, Hexamethylendiisocyanat, 4,4'-Diisocyanato-diphenylmethan, 2,4'-Diisocyanato-diphenylmethan, 2,4-Diisocyanatotoluol, 2,6-Diisocyanatotoluol oder α,α,α',α'-Tetramethyl-*m*- oder *p*-ylylendiisocyanat sowie Mischungen der genannten Diisocyanate. Besonders bevorzugte Diisocyanate sind 1-Isocyanato-3,3,5-trimethyl-5-isocyanatomethylcyclohexan (Isophorondiisocyanat) und 4,4'-Diisocyanato-dicyclohexylmethan.

Weiterhin sind als Polyisocyanate A1 solche Polyisocyanate geeignet, die z. B. über Isocyanurat-, Biuret-, Uretdion- oder Carbodiimidgruppen verfügen. Derartige Polyisocyanate können hohe Funktionalitäten, z. B. von mehr als 3, aufweisen.

Die polymeren Polyole A2 in dem Molgewichtsbereich von 400 - 6000 sind die üblichen wie sie für Polyurethane bereits seit langem eingesetzt werden, mit einer OH-Funktionalität von mindestens 1,8 bis ca. 4 wie zum Beispiel Polyester, Polyether, Polycarbonate, Polyestercarbonate, Polyacetale, Polyolefine und Polysiloxane. Bevorzugt verwendet werden Polyole in einem Molgewichtsbereich von 600 bis 2500 mit einer OH-Funktionalität von 2 bis 3.

Polyole, Aminopolyole oder Polyamine mit einem Molgewicht unter 400, die als Kettenverlängerer in Polyurethanen bzw. Polyurethan-Dispersionen Verwendung finden können, sind in der entsprechenden Literatur ebenfalls in großer Zahl beschrieben. Als Beispiel seien genannt:
Ethandiol, Butandiol-1,4, Cyclohexandimethanol, Trimethylolpropan, Glycerin sowie Ethylendiamin, 1,4-Diaminobutan, Isophorondiamin und 4,4-Diaminodicyclohexylmethan.
Niedermolekulare Polyole, die zur Ausbildung einer ionischen Gruppe befähigt sind, sind z. B. Dimethylolpropionsäure und N-Methyl-diethanolamin.

Neben Polyolen bzw. Polyaminen können auch Polyoxyalkylenether die pro Molekül mindestens eine OH-Gruppe tragen und z.B. aus einem Alkohol und aus Ethylenoxid/Propylenoxid bestehen mit einem Molgewicht von 250 bis etwa 3000 in das Polyurethan eingebaut werden. Es ist bekannt, dass die Substanzen Hydrophilieträger sind und die Dispergierung des PUR in Wasser verbessern.

Neben dem Einsatz difunktioneller OH-Komponenten kommt, wie aus der Literatur bekannt, auch die Terminierung des Polyurethan-Präpolymers mit einem difunktionellen Alkohol in Betracht. Geeignete Monoalkohole umfassen auch solche mit polymerisierbaren funktionellen Gruppen (z.B. OH-Gruppen tragende (Meth)acrylsäureester).

Ein bevorzugtes Verfahren zur Herstellung selbstvernetzender Hybriddispersionen beinhaltet eine vollständige Kettenverlängerung der Isocyanatgruppen ohne Terminierung mit einer gesättigten oder ungesättigten Mono-Alkoholkomponente.

Die Herstellung der wässrigen PUR-Dispersionen erfolgt in der bekannten üblichen Art. Man läßt die Polyisocyanatkomponente mit polymerem Polyol und niedermolekularen Kettenverlängerern zu einem Polyurethan ausreagieren, wobei gegebenenfalls und vorteilhaft ein Lösungsmittel mitverwendet wird, das später gegebenenfalls wieder abgetrennt werden kann.

In einem weiteren Schritt werden anschließend zur Neutralisation befähigte Gruppen in die Salzform überführt und mit Wasser die Dispersion erzeugt. Eventuell noch vorhandene restliche NCO-Gruppen werden nach bzw. während des Dispergierschrittes kettenverlängert. Hierzu reagieren die NCO-Gruppen mit der Dispersion zugegebenem Kettenverlängerern (z.B. Polyaminen) oder mit Wasser. Bei Mitverwendung eines leichtsiedenden Lösemittels kann dieses durch Destillation wieder abgetrennt und zurückgewonnen werden.

Je nach Neutralisationsgrad kann die Dispersion sehr feinteilig eingestellt werden, so dass sie praktisch das Aussehen einer Lösung hat, aber auch sehr grobteilige Einstellungen sind möglich, die ebenfalls ausreichend stabil sind. Auch der Feststoffgehalt kann in weiten Grenzen von z. B. 20 - 50 % variiert werden.

Nach der Herstellung der Polyurethan-Dispersion erfolgt im nächsten Schritt die Polymerisation der Vinylmonomere. Diese Monomere enthalten mindestens eine radikalisch polymerisierbare Komponente, die Acetoacetoxygruppen enthält, z.B. Acetoacetoxyethyl-acrylat oder bevorzugt Acetoacetoxyethyl-methacrylat. Daneben können weitere, nicht-Acetoacetoxy-funktionelle Monomere eingesetzt werden. Beispielhaft seien genannt: Styrol, (Meth)acrylsäureester mit 1 - 12 C-Atomen im Alkoholrest wie Methylmethacrylat, Butylmethacrylat, Ethylacrylat, Butylacrylat, 2-Ethylhexylacrylat, Di(meth)acrylsäureester von Diolen, z.B. Ethylenglykol, 1,4-Butandiol, 1,6-Hexandiol, außerdem (Meth)acrylsäureamid oder (Meth)acrylsäurenitril sowie Vinlyester aliphatischer Carbonsäuren mit 2 oder mehr C-Atomen, z.B. Vinylacetat oder Versaticsäure-vinylester. Ebenfalls kommen solche Monomere in Frage, die Hydroxy- oder Säuregruppen tragen, z. B. Hydroxyethyl(meth)acrylat oder (Meth)acrylsäure. Bevorzugt werden jedoch keine Säure-funktionellen Monomere in die Polymerisation einbezogen. Die Menge an polymerisierbaren Monomeren beträgt, bezogen auf die Summe A und B, 5 - 90 Gew.-%, bevorzugt 10 - 60 Gew.-%.

Die Polymerisation wird bevorzugt nach dem Verfahren der wässrigen Emulsionspolymerisation durchgeführt. Beispielsweise kann man dabei folgendermaßen vorgehen:

Es wird eine durch Radikalstarter initiierte Emulsionscopolymerisation der oben genannten Monomeren in Gegenwart der Polyurethan-Dispersion durchgeführt. Die Durchführuung der Emulsionspolymerisation kann entweder auf die Weise erfolgen, dass man die Polyurethan-Dispersion und gegebenenfalls eine oberflächenaktive Substanz vorlegt und dann die Monomeren und den Initiator über einen bestimmten Zeitraum, z. B. zwischen 0,5 und 6 Stunden, getrennt zudosiert, oder aber, dass man einen Teil der Polyurethan-Dispersion vorlegt und den Rest zusammen mit den Monomeren und den Initiator in getrennten Mengenströmen ebenfalls über einen Zeitraum von z. B. 0,5 - 6 h zudosiert.

Es kann aber auch so verfahren werden, dass über den gesamten Zeitraum der Polymerisation Polyurethan -Dispersion, Monomere und Initiator getrennt und kontinuierlich zudosiert werden und nur eine bestimmte Menge an Wasser vorgelegt wird. Diese Art der Polymerisation eignet sich aber auch zur Durchführung einer batch-Fahrweise, d.h. Polyurethan-Dispersion, Monomerengemisch und Initiator werden zusammen vorgelegt, auf die gewünschte Polymerisationstemperatur erhitzt und zwischen 2 und 10 h bei dieser Temperatur gehalten.

Als Initiatoren eignen sich z.B. Kaliumpersulfat, Ammoniumpersulfat, organische Peroxide, organische Hydroperoxide, Wasserstoffperoxid sowie bevorzugt Redox-Systeme. Besonders bevorzugte Beispiele sind Redox-Systeme aus wasserlöslichen, Radikale liefernden nichtionogenen Peroxiden wie *t*-Butylhydroperoxid als Oxidationskomponente und Reduktionskomponenten wie z. B. Formaldehydsulfoxylat oder Ascorbinsäure sowie katalytischen Mengen eines Eisen (II)-Salzes.

Die Emulsionspolymerisation erfolgt im allgemeinen bei Temperaturen zwischen 20°C und 100 °C, bevorzugt zwischen 40 °C und 65 °C.

Nach Beendigung der Polymerisationsreaktion auf die beispielhaft beschriebene Art erhält man eine feinteilige wässrige Polymeremulsion mit einem durch Laser-Korrelationsspektroskopie gemessenen mittleren Teilchendurchmesser zwischen 15 und 200 nm, vorzugsweise zwischen 30 und 100 nm, entstanden.

Die Dispersion enthält neben Homo- und/ oder Copolymeren der zur Polymerisation eingesetzten Monomeren oder Monomergemischen auch Anteile von Pfropfprodukten der Monomeren, die auf die Polymerketten des Polyurethans als Pfropfgrundlage aufgepfropft sind. Solche Pfropfreaktionen, die durch Übertragungsreaktionen durch den Emulgator ausgelöst werden, sind bekannt [z.B. Fortschritte der Hochpolymer-Forschung **1**, 300 (1959), DE-A 1 953 348].

Die so hergestellte Hybriddispersion ist Säure-funktionell und Acetoacetoxy-funktionell. Die eingebauten Acetoacetoxy-gruppen sind ausschließlich in den Polyacrylatteil, die Säuregruppen bevorzugt in den Polyurethanteil eingebaut.

Nach beendeter Copolymerisation wird der Dispersion ein Polyamin oder ein Gemisch verschiedener Polyamine - zur besseren Einarbeitbarkeit bevorzugt in Wasser gelöst - zugegeben. Als Polyamin kommen alle Verbindungen mit mehr als einer Aminogruppe in Frage. Bevorzugt werden di-primäre, aliphatische Amine wie z. B. Ethylendiamin, Hexamethylendiamin und Isophorondiamin oder solche Verbindungen, die sowohl primäre als auch sekundäre Aminogruppen enthalten, wie z. B. Diethylentriamin oder Triethylentetramin, eingesetzt.

Alternativ kann das Polyamin oder das Gemisch verschiedener Poyamine bereits zur Neutralisation des Polyurethan-präpolymeren eingesetzt werden. Dies bedeutet jedoch, dass das Präpolymer bei der Neutralisation nicht mehr Isocyanat-funktionell sein darf. Die Kettenverlängerung muß dann also bereits vor der Dispergierung erfolgen.

Wird die Kettenverlängerung der Polyurethan-Dispersion in Wasser durchgeführt, so weisen die erfindungsgemäßen Hybriddispersionen, bedingt durch die Anwesenheit sowohl des Neutralisationsamins als auch des Vernetzer- Polyamins, unter Umständen einen hohen pH-Wert auf. Oft ist es jedoch wünschenswert, einen möglichst niedrigen pH-Wert - z.B. pH 7 - 8,5 - einzustellen. Falls das Neutralisationsamin leichter flüchtig ist als das Vernetzeramin, ist es ohne Einbußen bezüglich der Endeigenschaften oder der Lagerstabilität möglich, anschließend das Neutralisationsamin aus dem System (destillativ) zu entfernen.

Die erfindungesgemäßen Hybriddispersionen können eingesetzt werden als Bindemittel in Lacken, die bei niedrigen Temperaturen z.B bei Umgebungstemperatur, vernetzen. Bevorzugt werden die Hybriddispersionen als Bindemittel in Lacken für die Holz- und für die Kunststoffbeschichtung eingesetzt.

### Beispiele:

### Verwendete Abkürzungen:

- PUD:: Polyurethandispersion
- MMA:: Methylmethacrylat
- BMA:: Butylmethacrylat
- AAEM:: Acetoacetoxyethylmethacrylat
- DETA:: Diethylentriamin
- MTG:: Mittlere Teilchengröße
- FK:: Festkörpergehalt

### Polyurethandispersion A1:

In einem 4 1-Dreihalskolben mit Rückflußkühler, Innenthermometer und Rührer werden 690 g Poly(tetrahydrofuran)-diol mit einer Molmasse von 1000 g, 98 g Cyclohexandimethanol, 139 g Dimethylolpropionsäure und 383 g N-Methylpyrrolidon vorgelegt. Durch Erhitzen auf 70°C wird eine klare Lösung hergestellt. Anschließend werden 977 g Methylen-bis-4-isocyanatocyclohexan (Desmodur ® W, Bayer AG) zugefügt und der Ansatz auf 100°C erhitzt. Bei dieser Temperatur wird solange gerührt, bis der Isocyanatgehalt der so hergestellten Präpolymerlösung 4,8 % beträgt. Nun kühlt man auf 50 °C ab und gibt 105 g Triethylamin zu.

In einem zweiten 4 1-Dreihalskolben mit Innenthermometer und Rührer werden 2508 g entionisiertes Wasser vorgelegt Man erwärmt auf 40°C und gibt unter Rühren innnerhalb von 15 min 2087 g der Präpolymerlösung zu. Anschließend wird 10 min bei 40-50 °C gerührt, dann gibt man innerhalb von 30 min eine Lösung von 48 g Ethylendiamin in 277 g Wasser zu.

### Polyurethandispersion A2:

Man verfährt wie unter **A1** beschrieben, ersetzt jedoch das Poly(tetrahydrofuran)-Makrodiol durch ein Polyester-carbonatdiol, MG = 1000 g/ mol).

### Polyurethandispersion A3:

Man verfährt wie unter **A1** beschrieben, ersetzt jedoch das Poly(tetrahydrofuran)-Makrodiol durch ein Polyesterdiol aus Adipinsäure und Diethylenglykol, MG = 1000 g/mol).

### Polyurethan-Polyacrylat-Hybriddispersion B1:

In einem 1 l-Vierhalskolben mit Rückflußkühler, Innenthermometer und Rührer werden 412 g der Polyurethandispersion **A1**, 142 g Wasser, 0,7 g einer 0,9 %-igen Lösung von Eisen (II)- Sulfat in Wasser und 0,7 g einer 0,9 %-igen Lösung von (Trilon®B) EDTA (Ethylendiamin-N,N,N',N'-tetraessigsäure) in Wasser gegeben und auf 50°C erhitzt.

Jeweils 25 % der Lösungen I, II, III (siehe unten) werden innerhalb von 5 min unter Rühren zugegeben. Eine leichte Exothermie zeigt den Beginn der Polymerisationsreaktion an Der Reaktionsansatz wird 30 min bei 50°C gerührt, dann werden die restlichen 75 % der Lösungen I, II, III innerhalb 1 h parallel zudosiert. Man läßt 1 h nachreagieren und kühlt dann auf 25°C ab. Nun wird innerhalb von 15 min eine Lösung von 3 g Diethylentriamin (25 %-ig in Wasser) zugetropft. Nach weiteren 30 min wird der Ansatz filtriert (Filter T5500, Fa. Seitz).

Die Dispersion weist folgende Kennzahlen auf:

| | |
|---|---|
| MTG | 64 nm (Laserkorrelationsspektroskopie) |
| FK | 35,3 % |
| pH | 9,8 |

| | |
|---|---|
| Lösung I | 94 g MMA, 37 g BMA, 19 g AAEM |
| Lösung II | 0,7 g Na-Formaldehydsulfoxylat, gelöst in 67 g Wasser |
| Lösung III | 1,5 g *t*-Butylhydroperoxid (70 %-ig in Wasser), gelöst in 75 g Wasser |

### Polyurethan-Polyacrylat-Hybriddispersionen B2 - B7:

Die Polyurethan-Polyacrylat-Hybriddispersionen **B2 - B7** werden analog zu der oben beschriebenen Fahrweise, jedoch mit folgender Zusammensetzung hergestellt:

| Einwaage / g | **B2** | **B3** | **B4** | **B5** | **B6** | **B7**^{**1)**} |
|---|---|---|---|---|---|---|
| PUD A1 | 412 | 412 | - | - | 135 | 412 |
| PUD A2 | - | - | 412 | - | - | - |
| PUD A3 | - | - | - | 412 | - | - |
| MMA | 100 | 87 | 94 | 94 | 148 | 94 |
| BMA | 40 | 35 | 38 | 38 | 148 | 38 |
| AAEM | 9 | 28 | 19 | 19 | 108 | 19 |
| DETA | 1,5 | 4,5 | 3,0 | 3,0 | 17,3 | 3,0 |

| Kennzahlen: | | | | | | |
|---|---|---|---|---|---|---|
| MTG/nm | 64 | 71 | 35 | 105 | 95 | 69 |
| FK/% | 35,3 | 35,4 | 36,2 | 35,8 | 33,6 | 37,0 |
| pH | 9,8 | 10,2 | 10,1 | 10,3 | 10,9 | 8,4 |
| ¹⁾Nach Zugabe der Diethylentriamin-Lösung wird für 8 h Stickstoff durch die auf 50°C erwärmte Dispersion geleitet, um das Triethylamin zu entfernen. | | | | | | |

Zur Formulierung von Klarlacken fügt man zu 100 Gew.-Teilen der Dispersionen **B1 - B7** folgende Rezepturbestandteile:
- Colöser:: N-Methylpyrrolidon (11 Gew.-Teile; B6: 12,5 Gew.-Teile), Butylglykol-Wasser 1:1 (10 Gew.-Teile)
- Entschäumer:: Tego Foamex ® 805, Lieferform (0,2 Gew.-Teile) (Tego-Chemie)
- Additiv zur Verbesserungder Untergrundbenetzung:: Byk ® 346, Lieferform (0,5 Gew.-Teile)
- Verdicker:: Acrysol ® RM8, 5%-ig in Wasser (1,0 Gew.-Teile) (Dohan and Haas)

Zur Bestimmung der Filmhärte (Pendeldämpfung nach DIN 53 157) werden die Lacke mit einer Naßfilm-Schichtstärke von 200µm auf Glasplatten appliziert. Zur Bestimmung der Beständigkeiten gegen Wasser und Ethanol (50 %-ige wässrige Lösung) sowie Aceton werden die Klarlacke in 3 Schichten (jeweils 100 g Lack/ m²) auf Eichenholzplatten appliziert, anschließend wird jeweils fiir 30 min bei 50°C forciert getrocknet. Vor Applikation der 2. und 3. Schicht wird die Lackoberfläche leicht angeschliffen. Beständigkeiten bestimmt man nach folgender Methode: Mit dem Lösemittel getränkte Wattebäusche werden auf 7 Tage alte Lackfilme aufgelegt und mit Petrischalen abgedeckt. Nach Einwirkzeiten von 24 Stunden (Wasser), 5 Minuten (Ethanol) bzw. 10 Sekunden (Aceton) erfolgt die Beurteilung, nachdem die benetzten Filme mit Haushaltspapier vorsichtig getrocknet worden sind. Beurteilt werden Erweichung, Trübung, Haftverlust, Unterwanderung jeweils in einer Skala von 0 bis 4:

| | **Erweichung** | **Trübung** | **Haftverlust** | **Unterwanderung** |
|---|---|---|---|---|
| **0** | unverändert | unverändert, klar | unverändert | unverändert |
| **1** | sehr schwach | Schleier | schwer abkratzbar | winzige Bläschen |
| **2** | etwas stärker | trübe | abkratzbar | Bläschen |
| **3** | mit Fingernagel leicht zu beschädigen | stark trübe | leicht abkratzbar | viele Blasen |
| **4** | läßt sich wegwischen | milchig | Film löst sich beim Abtupfen | Flüssigkeitsansammlung |

Die folgenden Prüfergebnisse zeigen die hochwertigen Beständigkeitseigenschaften von Lacken aus den erfindungsgemäßen Dispersionen:

| | **B1** | **B2** | **B3** | **B4** | **B5** | **B6** | **B7** |
|---|---|---|---|---|---|---|---|
| Pendeldämpfung / s (DIN 53 157) | | | | | | | |
| nach 1 Stunde | 29 | 17 | 29 | 21 | 31 | 34 | 21 |
| nach 1 Tag | 91 | 49 | 84 | 49 | 95 | 74 | 62 |
| nach 7 Tagen | 144 | 132 | 141 | 127 | 126 | 133 | 137 |

| LM-Beständigkeiten | | | | | | | |
|---|---|---|---|---|---|---|---|
| Wasser(24h) | 0200 | 0100 | 0100 | 0000 | 1000 | 0110 | 0100 |
| Ethanol(5') | 0000 | 2000 | 0000 | 0000 | 2010 | 2000 | 2000 |
| Aceton(10") | 1000 | 0000 | 1000 | 1000 | 1100 | 1000 | 1000 |

## Patentansprüche

1. Lagerstabile, nach Applikation selbstvernetzende Hybriddispersion aus
A. 10 bis 95 Gew.-% einer Polyurethandispersion, bestehend aus
A1. Polyisocyanaten,
A2. polymeren Polyolen mit mittleren Molgewichten von 400 bis 6000,
A3. gegebenenfalls Monoalkoholen,
A4. Polyolen, Aminopolyolen oder Polyaminen mit einem Molgewicht unter 400, wobei wenigstens eines dieser Polyole bzw. Polyamine eine anionische Gruppe enthält oder zur Ausbildung einer anionischen Gruppe befähigt ist,
B. 5 bis 90 Gew.-% eines Polymerisats aus einer Mischung von radikalisch polymerisierbaren Monomeren, enthaltend 0,5 bis 20 Gew.-% (bezogen auf den Gesamt-Festgehalt der Hybriddispersion) einer Verbindung, die Acetoacetoxygruppen trägt,
C. einem mindestens difunktionellen primären odersekundären Amin mit einem Molekulargewicht von weniger als 1000 im Äquivalentverhältnis, bezogen auf Acetoacetoxygruppen von 0,5:1 bis 1,1:1,
wobei gilt, dass sich die Komponenten A und B zu 100 Gew.-% (bezogen auf das Gesamtgewicht A und B) addieren und in Wasser oder einem Gemisch aus Wasser und einem geeigneten Colöser dispergiert vorliegen.

2. Hybriddispersion gemäß Anspruch 1, aus
A. 40 bis 90 Gew.-% einer Polyurethadispersion, bestehend aus
A1. 30 bis 75 Gew.-% Polyisocyanaten,
A2. 20 bis 70 Gew.-% polymeren Polyolen mit mittleren Molgewichten von 400 bis 6000,
A3. 0 bis 10 Gew.-% Monoalkoholen,
A4. 2 bis 20 Gew.-% Polyolen, Aminopolyolen oder Polyaminen mit einem Molgewicht unter 400, wobei wenigstens eines dieser Polyole bzw. Polyamine eine anionische Gruppe enthält oder zur Ausbildung einer anionischen Gruppe befähigt ist,
wobei gilt, dass sich die Einsatzstoffe A1, A2, A3, A4 zu 100 % addieren und sich auf das Gesamtgewicht A1, A2, A3 und A4 beziehen,
B. 10 bis 60 Gew.-% eines Polymerisats aus einer Mischung von radikalisch polymerisierbaren Monomeren, enthaltend 0,5 bis 20 Gew.-% (bezogen auf den Gesamt-Festgehalt der Hybriddispersion) einer Verbindung, die Acetoacetoxygruppen trägt,
C. einem mindestens difunktionellen primären oder sekundären Amin mit einem Molekulargewicht von weniger als 1000 im Äquivalentverhältnis, bezogen auf Acetoacetoxygruppen von 0,5:1 bis 1:1
wobei gilt, dass sich die Komponenten A und B zu 100 Gew.-% (bezogen auf das Gesamtgewicht A und B) addieren und in Wasser oder einem Gemisch aus Wasser und einem geeigneten Colöser dispergiert vorliegen.

3. Hybriddispersionen gemäß Ansprüchen 1 und 2, wobei die Polyisocyanatkomponente A1 1-Isocyanato-3,3,5-trimethyl-5-isocyanatomethylcyclohexan (Isophorondiisocyanat) ist.

4. Hybriddispersionen gemäß Ansprüchen 1 und 2, wobei die Polyisocyanatkomponente A1 4,4'-Diisocyanato-dicyclohexylmethan ist.

5. Hybriddispersionen gemäß Ansprüchen 1 bis 4, wobei als Acetoacetoxy-funktionelles Monomer Acetoacetoxyethyl-methacrylat eingesetzt wird.

6. Hybriddispersion gemäß Ansprüchen 1 bis 5, wobei die Mono-Alkoholkomponente A3 eine radikalisch polymerisierbare Doppelbindung enthält.

7. Verwendung von Dispersionen gemäß Ansprüchen 1 bis 6 als Bindemittel für lagerstabile Einkomponentenlacke.

8. Verwendung von Dispersionen gemäß Ansprüchen 1 bis 6 als Bindemittel für die Holzbeschichtung.

9. Verwendung von Dispersionen gemäß Ansprüchen 1 bis 6 als Bindemittel fiir Parkettlacke.

10. Mit Hybriddispersionen gemäß Ansprüchen 1 bis 6 beschichtete Kunststoffe.

11. Mit Hybriddispersionen gemäß Ansprüchen 1 bis 6 beschichtetes Holz.

## Claims

1. Storage-stable hybrid dispersion, which self-crosslinks after application, of
A. 10 to 95% wt.% of a polyurethane dispersion comprising
A1. polyisocyanates,
A2. polymeric polyols having average molecular weights of 400 to 6,000,
A3. optionally monoalcohols,
A4. polyols, aminopolyols or polyamines having a molecular weight of less than 400, where at least one of these polyols or polyamines contains an ionic group or is capable of formation of an ionic group,
B. 5 to 90 wt.% of a polymer of a mixture of monomers which can be polymerized by free radicals, comprising 0.5 to 20 wt.% (based on the total solids content of the hybrid dispersion) of a compound which carries acetoacetoxy groups,
C. an at least difunctional primary or secondary amine with a molecular weight of less than 1,000 in an equivalent ratio, based on the acetoacetoxy groups, of 0.5:1 to 1.1:1,
components A and B adding up to 100 wt.% (based on the total weight of A and B) and being present as a dispersion in water or a mixture of water and a suitable cosolvent.

2. Hybrid dispersion according to claim 1, of
A. 40 to 90 wt.% of a polyurethane dispersion comprising
A1. 30 to 75 wt.% polyisocyanates,
A2. 20 to 70 wt.% polymeric polyols having average molecular weights of 400 to 6,000,
A3. 0 to 10 wt.% monoalcohols,
A4. 2 to 20 wt.% polyols, aminopolyols or polyamines having a molecular weight of less than 400, where at least one of these polyols or polyamines contains an ionic group or is capable of formation of an ionic group,
starting substances A1, A2, A3 and A4 adding up to 100% and being based on the total weight of A1, A2, A3 and A4.
B. 10 to 60 wt.% of a polymer of a mixture of monomers which can be polymerized by free radicals, comprising 0.5 to 20 wt.% (based on the total solids content of the hybrid dispersion) of a compound which carries acetoacetoxy groups,
C. an at least difunctional primary or secondary amine with a molecular weight of less than 1,000 in an equivalent ratio, based on the acetoacetoxy groups, of 0.5:1 to 1:1, components A and B adding up to 100 wt.% (based on the total weight of A and B) and being present as a dispersion in water or a mixture of water and a suitable cosolvent.

3. Hybrid dispersions according to claims 1 and 2, wherein the polyisocyanate component A1 is 1-isocyanato-3,3,5-trimethyl-5-isocyanatomethylcyclohexane (isophorone diisocyanate).

4. Hybrid dispersions according to claims 1 and 2, wherein the polyisocyanate component A1 is 4,4'-diisocyanato-dicyclohexylmethane.

5. Hybrid dispersions according to claims 1 to 4, wherein acetoacetoxyethyl methacrylate is employed as the monomer containing acetoacetoxy functional groups.

6. Hybrid dispersion according to claims 1 to 5, wherein the monoalcohol component A3 contains a double bond which can be polymerized by free radicals.

7. Use of dispersions according to claims 1 to 6 as binders for storage-stable one-component paints.

8. Use of dispersions according to claims 1 to 6 as binders for coating of wood.

9. Use of dispersions according to claims 1 to 6 as binders for parquet paints.

10. Plastics coated with hybrid dispersions according to claims 1 to 6.

11. Wood coated with hybrid dispersions according to claims 1 to 6.

## Revendications

1. Dispersion hybride, auto-réticulante après application, stable à l'entreposage constituée :
A. de 10 à 95 % en poids d'une dispersion de polyuréthane, constituée de :
A1. de polyisocyanates ;
A2. de polyols polymères présentant des poids moléculaires entre 400 et 6000 ;
A3. le cas échéant de monoalcools ;
A4. de polyols, d'aminopolyols ou de polyamines présentant un poids moléculaire inférieur à 400, parmi lesquels au moins un de ces polyols ou polyamines contient un groupe anionique ou est capable de former un groupe anionique.
B. de 5 - 90 % en poids d'un polymère préparé à partir d'un mélange de monomères polymérisables par voie radicalaire, contenant 0,5 à 20 % en poids d'un composé,(rapporté à la teneur totale en matières solides de la dispersion hybride) portant les groupes acéto-acétoxy.
C. d'au moins une amine secondaire ou primaire difonctionnelle présentant un poids moléculaire inférieur à 1000 dans un rapport d'équivalence, rapporté aux groupes acéto-acétoxy de 0,5 :1 à 1,1 :1.
les composants A et B s'ajoutant pour former 100% en poids (par rapport au poids total de A et B) et se trouvant sous forme dispersée dans l'eau ou dans un mélange composé d'eau et d'un co-solvant approprié.

2. Dispersion hybride selon la revendication 1, constituée :
A. de 40 à 90 % du poids d'une dispersion de polyuréthane, constituée :
A1. de 30 à 75 % en poids de polyisocyanates
A2. de 20 à 70 % en poids de polyols polymères présentant un poids moléculaire moyen de 400 à 6000 ;
A3. de 0 à 10 % en poids de monoalcools ;
A4. de 2 à 20% en poids de polyols, d'amino-polyols ou de polyamines présentant un poids moléculaire inférieur à 400, au moins un de ces polyols ou polyamines contenant un groupe anionique ou étant capable de former un groupe anionique.
les substances utilisées A1, A2, A3, A4 s'additionnant à 100% et se rapportant au poids total de A1, A2, A3 et A4.
B. de 10 à 60 % en poids d'un polymère produit par un mélange de monomères polymérisables par voie radicalaire, contenant 0,5 à 20 % en poids d'un composé (rapporté à la teneur totale en matières solides de la dispersion hybride) portant les groupes acéto-acétoxy.
C. au moins une amine secondaire ou primaire difonctionnelle présentant un poids moléculaire inférieur à 1000 dans un rapport d'équivalence, rapporté aux groupes acéto-acétoxy de 0,5 :1 à 1 :1.
les composants A et B s'ajoutant pour former 100 % en poids et se trouvant dans l'eau ou dans un mélange composé d'eau et d'un co-solvant approprié.

3. Dispersions hybrides selon les revendications 1 et 2, le composant polyisocyanate A1 étant du 1-isocyanato-3,3,5-triméthyl-5-isocyanatométhylcyclohexane (diisocyanate d' isophorone).

4. Dispersions hybrides selon les revendications 1 et 2, le composant polyisocyanate A1 étant du 4,4'-diisocyanato-dicyclohexylméthane.

5. Dispersions hybrides selon l'une quelconque des revendications 1 à 4, du méthacrylate d'acétoacétoxyéthyle étant utilisé comme monomère à fonctionnalité acétoacétoxy.

6. Dispersion hybride selon les revendications 1 à 5, le composant monoalcool A3 contenant une double liaison polymérisable par voie radicalaire.

7. Utilisation des dispersions selon les revendications 1 à 6 comme agents liants pour les laques à un composant stables à l'entreposage.

8. Utilisation des dispersions selon les revendications 1 à 6 comme agents liants pour le revêtement du bois.

9. Utilisation des dispersions les revendications 1 à 6 comme agents liants pour les laques à parquet.

10. Matériaux synthétiques revêtus avec les dispersions hybrides selon les revendications 1 à 6.

11. Bois revêtu avec les dispersions hybrides selon les revendications 1 à 6.
